# EUROPEAN PATENT SPECIFICATION

(11) **EP 1 587 284 B1**
(45) Date of publication and mention of the grant of the patent: **28.07.2010**
(21) Application number: 05007654.6
(22) Date of filing: 07.04.2005
(51) Int. Cl.: H04M 1/02, H04M 1/23

(54) **Portable terminal with touch key**
Tragbares Endgerät mit touch key
Terminal portable avec touch key

(30) Priority: 14.04.2004 KR 2004025721
(43) Date of publication of application: 19.10.2005
(73) Proprietor: SAMSUNG ELECTRONICS CO., LTD., Suwon-si, Gyeonggi-do (KR)
(72) Inventor: Im, Jung-Hyeok, Samsung Electronics Co., Ltd., Suwon-si, Gyeonggi-do (KR); Lee, Jong-Seong, Samsung Electronics Co., Ltd., Suwon-si, Gyeonggi-do (KR)
(74) Representative: Grünecker, Kinkeldey, Stockmair & Schwanhäusser Anwaltssozietät

(56) References cited:
- EP-A- 1 298 888
- JP-A- 2002 287 889
- US-A1- 2004 022 386

## Description

### BACKGROUND OF THE INVENTION

### 1. Field of the Invention

The present invention relates to portable communication apparatuses, such as cellular phones, PDAs (personal digital assistants), HHPs (hand held phones), and digital communication apparatuses, and more particularly to a portable terminal including touch keys allowing a user to easily input data into the portable terminal using the touch keys through a new concept of simple touch motions.

### 2. Description of the Related Art

In general, a "portable communication apparatus" refers to an electronic apparatus allowing a user to perform wireless communication with a desired partner while carrying the portable communication apparatus. In consideration of portability, designs of such portable communication apparatuses tend to be compact, slim, and light, and also have multimedia availability, having a wider variety of functions. In particular, future portable communication apparatuses are gradually expected to incorporate greater multi-functionality and multi-purpose utilization, as well as being even more compact and lighter, and also will likely be modified to be suitable for various multimedia environments or Internet environments. Additionally, such portable communication apparatuses are now commonly used by many people throughout the world, and are recognized by many as an indispensable part of everyday life.

Conventional portable communication apparatuses may be classified into various types according to external appearances thereof. For example, the conventional portable communication apparatuses are divided into bar-type portable communication apparatuses, flip-type portable communication apparatuses, and folder-type portable communication apparatuses according to their external appearances. The bar-type portable communication apparatus has a single housing shaped like a bar. The flip-type portable communication apparatus has a flip which is rotatively mounted to a bar-shaped housing by a hinge unit. The folder-type portable communication apparatus has a folder coupled to a single bar-shaped housing by a hinge unit in such a manner that the folder can be rotated in order to be folded to or unfolded from the housing.

Further, portable communication apparatuses may be classified into neck wearable type communication apparatuses and wrist wearable type communication apparatuses according to the position thereof or the way in which a user puts on the communication apparatus. The neck wearable type communication apparatus is one which a user wears around the neck by using a string, while the wrist wearable type communication apparatus is one which a user wears around the wrist.

Additionally, portable communication apparatuses may be further classified into rotation-type communication apparatuses and sliding-type communication apparatuses according to ways of opening and closing the communication apparatuses. In the rotation-type portable communication apparatus, two housings are coupled to each other in such a manner that one housing rotates to be opened or closed relative to the other while facing each other. In the sliding-type portable communication apparatus, two housings are coupled to each other in such a manner that one housing slides to be opened or closed relative to the other. These variously classified portable communication apparatuses can be easily understood by those skilled in the art.

Meanwhile, conventional portable communication apparatuses now also tend to have a function of transmitting data at a high speed in addition to their basic function of performing voice communication. In other words, according to the increase of demand by consumers, portable communication apparatuses now tend to provide a service using a wireless communication technology capable of transmitting data at a high speed.

Recent portable communication apparatuses tend to be equipped with a camera lens which enables them to transmit an image signal. That is, current conventional portable communication apparatuses may have an imbedded or external camera lens, so that a user can perform image communication with a desired partner or take a photograph of a desired subject by a photographing means.

The above-mentioned various types of portable terminals essentially include antennas, data input/output apparatuses, and transmitting/receiving units. The data input apparatus includes generally a keypad or a touchpad allowing a user to input data by pressing keys of the keypad or the touchpad with their fingers, and the data output apparatus includes a liquid crystal display.

However, according to the conventional key pad used as a data input device, it is required for a user to press the key pad with a predetermined amount of force in order to achieve data input operation, which may be inconvenient. Particularly, since the key pad known in the art essentially includes rubber members for keys and metal domes, a thickness of the key pad becomes enlarged, resulting in a limitation in designing the external appearance of the key pad.

EP 1 298 888 A1 discloses a portable communication terminal with a base part and a moveable part. The moveable part can be opened and closed with respect to the base part. The base part has a display screen on its upper surface wherein this display screen is touch sensitive, and can be used to display a set of touch screen control buttons forming an alphabetic keyboard.

US 2004/0022386 A1 discloses a number keypad corral formed by a raised corral fence which surrounds a telephone number keypad. A corral fence is used to guide the fingers of a visually impaired to the desired number keys.

### SUMMARY OF THE INVENTION

It is an object of the present invention to provide a touch key, which enables a user to easily input data and to prevent a touch error.

Still another object of the present invention is to provide a touch key, which can be designed with various external appearances.

Still another object of the present invention is to provide a touch key, which can be fabricated with a simple design.

In order to accomplish the above object, there is provided a portable terminal with the features of claim 1.

Advantageous embodiments are disclosed by the sub-claims.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view showing a portable terminal having a touch key according to a preferred embodiment of the present invention;
FIG. 2 is a perspective view showing a full-open state of a sliding housing shown in FIG. 1;
FIG. 3 is a plan view of FIG 2;
FIG. 4 is a left side view of FIG. 2; and
FIG. 5 is a partial perspective view showing a bottom surface of a portable terminal having a touch key according to a preferred embodiment of the present invention.

### DETAILED DESCRIPTION OF THE PREFERRED EMBODIMENTS

Hereinafter, preferred embodiments of the present invention will be described with reference to the accompanying drawings. In the following description of the present invention, a detailed description of known functions and configurations incorporated herein will be omitted when it may make the subject matter of the present invention unclear.

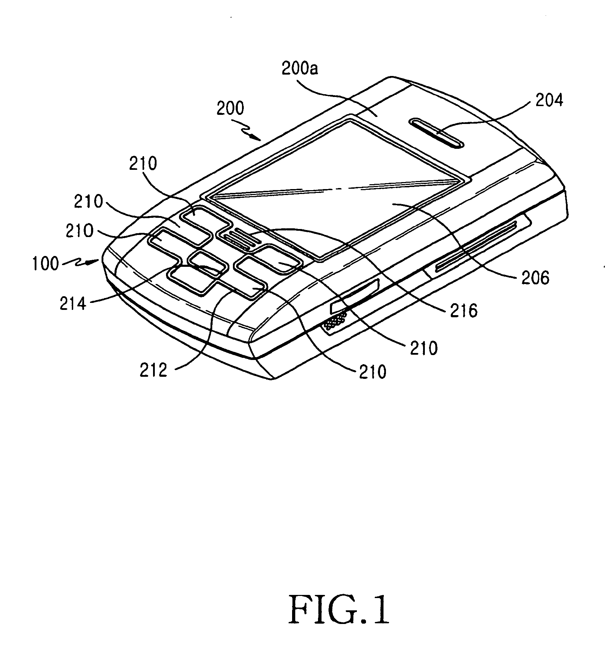

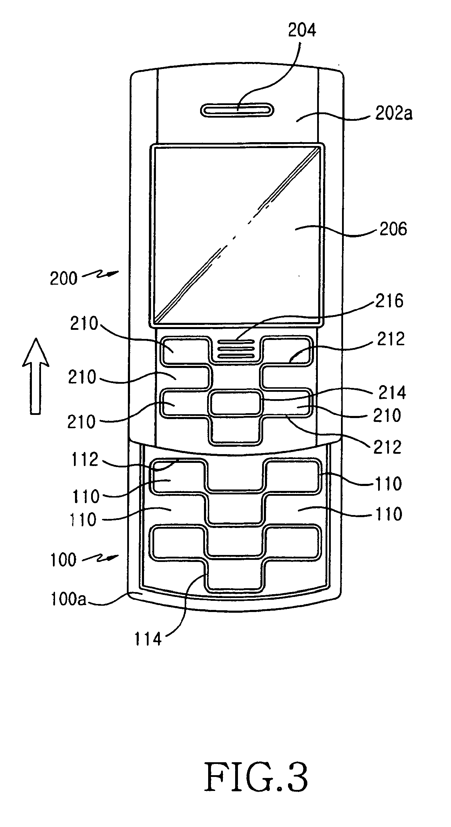

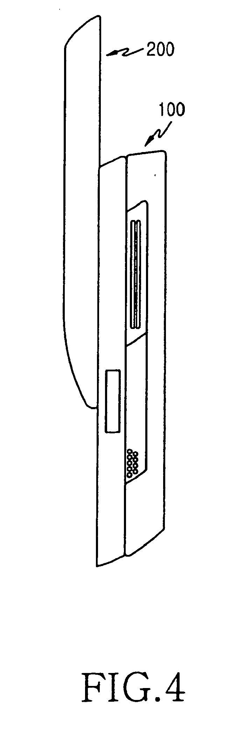

As shown in FIGs. 1 to 4, a portable terminal according to the present invention includes a plurality of first and second touch keys 110 and 210, which allow a user to easily input data through a simple touch action, and first and second protrusions as first parts 112, 114, and second parts 212 and 214 dividing touch regions of the first and second touch keys 110 and 210 in order to prevent a touch error. The first touch keys 110 are aligned adjacent to each other along horizontal and vertical directions thereof In addition, the first touch keys 110 are integrally formed with each other, and the second touch keys 210 are also integrally formed with each other.

In detail, the portable terminal according to the present invention includes a main housing 100, a sliding housing 200 moving lengthwise along the main housing 100 while a lower surface of the sliding housing 200 facing an upper surface of the main housing 100, first touch keys 110 aligned in a predetermined region of an upper surface 100a of the main housing 100, and first parts 112 and 114 for dividing a touch region of the first touch keys 110. Above-mentioned touch keys 110 and 210 refer to data input apparatuses allowing a user to input desired data by a simple touch action. In addition, it is not required for the first parts 112 and 114 to be formed such that the touch regions are horizontally or vertically divided by the first parts 112 and 114. That is, the touch regions can be formed in a circular pattern or in a symbol pattern.

The first parts 112 and 114 vertically protrude from the upper surface 100a of the main housing 100, and are continuously formed. In addition, the first touch keys 110 are integrally formed with the first parts 112 and 114.

The sliding housing 200 includes a plurality of second touch keys 210, which are formed on an upper surface of the sliding housing 200 in order to allow a user to input data through a touch action. In addition, second parts 212 and 214 protrude from the upper surface of the sliding housing 200 in order to divide touch regions of the second touch keys 210. The second parts 212 and 214 are protrusions which vertically protrude from the upper surface 200a of the sliding housing 200. In addition, the second touch keys 210 and the second parts 212 and 214 are integrally formed with each other. In addition, those protrusions 212 and 214 are continuously formed.

Preferably, a protuberance section 216 is formed at a predetermined portion adjacent to the second touch keys 210, that is, at an upper portion of the sliding housing 200 to facilitate sliding movement of the sliding housing 200. The protuberance section 216 includes a plurality of protuberances extending in a direction perpendicular to a sliding direction of the sliding housing 200. The protuberance section 216 is integrally formed with the second touch keys 210.

In addition, the sliding housing 200 is provided on the upper surface 200a thereof with a speaker 204, a liquid crystal display device 206 disposed adjacently to the speaker 204, and the second touch keys 210 disposed adjacently to the liquid crystal display device 206. When the sliding housing 200 is moved into an open position or a closed position with respect to the main housing 100, the first touch keys 110 are opened or closed according to the movement of the sliding housing 200. The second touch keys 210 remain exposed due to their external location. Accordingly, the first touch keys 110 are opened or closed depending on the sliding movement of the sliding housing 200.

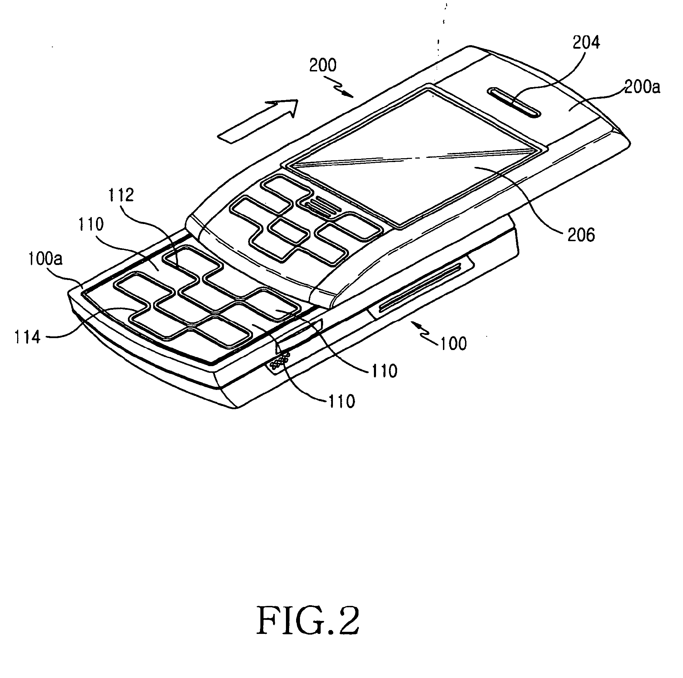

As shown in FIG 1, when the sliding housing 200 is positioned in a closed position with respect to the main housing 100, the second touch keys 210 overlap the first touch keys 110. As shown in FIG 2, when the sliding housing 200 is moved into the open position away from the main housing 100, the first touch keys 110 are disposed adjacently to the second touch keys 210.

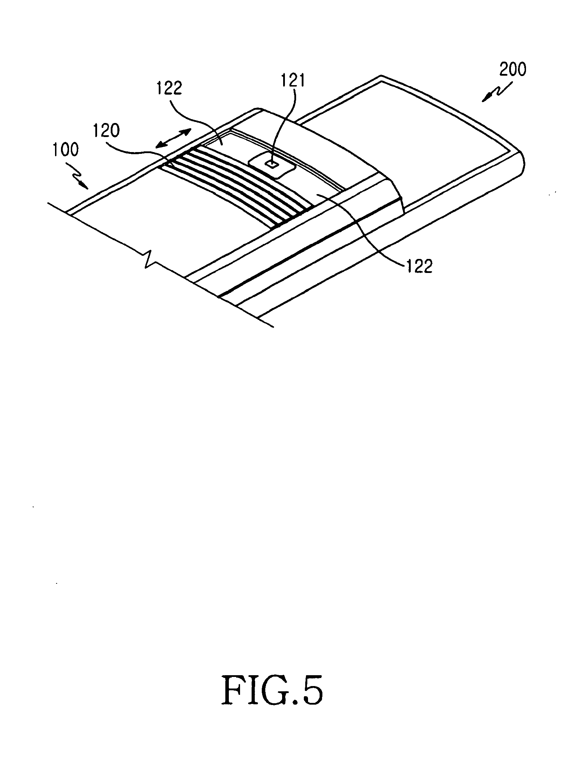

As shown in FIG 5, the portable terminal according to the present invention is provided on a lower surface thereof with a camera lens 121 and a pair of illumination units 122 disposed adjacently to the camera lens 121. In addition, the camera lens 121 and the illumination units 122 are protected by a sliding cover 120.

As described above, according to the present invention, first and second touch keys are employed in the portable terminal, so an external appearance of the portable terminal becomes simple and cosmetically appealing. In addition, a user can input data by a simple touch action, so a data input action can be conveniently achieved. In addition, a touch error can be prevented by employing protrusions for dividing touch regions. In addition, the protuberance section according to the present invention is provided on a predetermined region of the sliding housing, so the sliding movement of the sliding housing can be easily performed.

While the invention has been shown and described with reference to certain preferred embodiments thereof, it will be understood by those skilled in the art that various changes in form and details may be made therein without departing from the scope of the invention as defined by the appended claims.

## Claims

1. A portable terminal comprising:
- a main housing (100);
- a cover housing (200), which is opened and closed with respect to the main housing (100) and
- a plurality of first touch keys (110) aligned on an upper surface (100a) of the main housing (100) to allow a user to input data into the portable terminal with a touch action, **characterized by**
- first protrusions (112, 114) for dividing touch regions of the first touch keys (110).

2. The portable terminal according to claim 1, **characterized in that** said cover housing (200) is a sliding housing.

3. The portable terminal according to claim 1 or 2, **characterized in that** the first protrusions (112) divide the touch area horizontally.

4. The portable terminal according to one of the previous claims, **characterized by** second protrusions (114) dividing the touch area vertically.

5. The portable terminal according to claim 1 or 2, **characterized in that** the protrusions (112, 114) shape the touch area into a circle.

6. The portable terminal according to claim 1 or 2, **characterized in that** the protrusions (112, 114) shape the touch area into a symbol.

7. The portable terminal according to one of the previous claims, **characterized in that** a plurality of second touch keys (210) are provided on an upper surface (200a) of the sliding housing (200) to allow a user to input data by touching the second touch keys (210).

8. The portable terminal according to claim 7, **characterized in that** touch regions of the second touch keys (210) are divided by second parts (212, 214).

9. The portable terminal according to claim 7 or 8, **characterized in that** the second parts (212, 214) are protrusions protruding from the upper surface (200a) of the sliding housing (200).

10. The portable terminal according to one of the previous claims, **characterized in that** the first and second protrusions and/or second parts (112, 114; 212, 214) vertically protrude from the upper surfaces (100a, 200a) of the main housing (100) or the sliding housing (200), respectively.

11. The portable terminal according to one of the previous claims, **characterized in that** a protuberance section (216) is integrally formed with the second touch keys (210) for slidably opening and closing the sliding housing (200).

12. The portable terminal according to one of the previous claims, **characterized in that** the first and second protrusions (112, 114) and/or the second parts (212, 214) are continuously formed.

13. The portable terminal according to one of the previous claims, **characterized in that** the first touch keys (110) are opened and closed by the sliding housing (200), the second touch keys (210) overlap the first touch keys (110) when the sliding housing is positioned in a closed position with respect to the main housing (100), and the first touch keys (110) are disposed adjacently to the second touch keys (210) when the sliding housing is moved into an open position away from the main housing.

14. The portable terminal according to one of the previous claims, **characterized in that** the first touch keys (110) and/or the second touch keys (210) are integrally formed with the first and second protrusions and second parts (112, 114; 212, 214), respectively.

15. The portable terminal according to one of the previous claims, **characterized in that** a camera lens (121) is embedded on a bottom surface of the main housing (100) for taking photographs and movies.

16. The portable terminal according to claim 15, **characterized in that** at least one illumination unit (122) is disposed adjacent to the camera lens (121).

17. The portable terminal according to claim 15 or 16, **characterized in that** a sliding cover (120) is arranged for protecting the camera lens (121) and at least one illumination unit (122) when not in use.

## Patentansprüche

1. Tragbares Endgerät, das umfasst:
- ein Hauptgehäuse;
- ein Abdeckgehäuse (200), das in Bezug auf das Hauptgehäuse (100) geöffnet und geschlossen wird, und
- eine Vielzahl erster Berührungstasten (100), die auf einer oberen Fläche (100a) des Hauptgehäuses (100) ausgerichtet sind, um es einem Benutzer zu ermöglichen, mit einem Berührungsvorgang Daten in das tragbare Endgerät einzugeben, **gekennzeichnet durch**
- erste Vorsprünge (112, 114) zum Unterteilen von Berührungsbereichen der ersten Berührungstasten (110).

2. Tragbares Endgerät nach Anspruch 1, **dadurch gekennzeichnet, dass** das Abdeckgehäuse (200) ein Schiebegehäuse ist.

3. Tragbares Endgerät nach Anspruch 1 oder 2, **dadurch gekennzeichnet, dass** die ersten Vorsprünge (112) die Berührungsfläche horizontal unterteilen.

4. Tragbares Endgerät nach einem der vorangehenden Ansprüche, **dadurch gekennzeichnet, dass** zweite Vorsprünge (114) die Berührungsfläche vertikal unterteilen.

5. Tragbares Endgerät nach Anspruch 1 oder 2, **dadurch gekennzeichnet, dass** die Vorsprünge (112, 114) die Berührungsfläche zu einem Kreis formen.

6. Tragbares Endgerät nach Anspruch 1 oder 2, **dadurch gekennzeichnet, dass** die Vorsprünge (112, 114) die Berührungsfläche zu einem Symbol formen.

7. Tragbares Endgerät nach einem der vorangehenden Ansprüche, **dadurch gekennzeichnet, dass** eine Vielzahl zweiter Berührungstasten (210) an einer oberen Fläche (200a) des Schiebegehäuses (200) vorhanden sind, um es einem Benutzer zu ermöglichen, Daten durch Berühren der zweiten Berührungstasten (210) einzugeben.

8. Tragbares Endgerät nach Anspruch 7, **dadurch gekennzeichnet, dass** Berührungsbereiche der zweiten Berührungstasten (210) durch zweite Teile (212, 214) unterteilt werden.

9. Tragbares Endgerät nach Anspruch 7 oder 8, **dadurch gekennzeichnet, dass** die zweiten Teile (212, 214) Vorsprünge sind, die von der oberen Fläche (200a) des Schiebegehäuses (200) vorstehen.

10. Tragbares Endgerät nach einem der vorangehenden Ansprüche, **dadurch gekennzeichnet, dass** die ersten und die zweiten Vorsprünge und/oder die zweiten Teile (112, 114; 212, 214) vertikal von den oberen Flächen (100a, 200a) des Hauptgehäuses (100) bzw. des Schiebegehäuses (200) vorstehen.

11. Tragbares Endgerät nach einem der vorangehenden Ansprüche, **dadurch gekennzeichnet, dass** ein Höckerabschnitt (216) zum schiebenden Öffnen und Schließen des Schiebegehäuses (200) integral mit den zweiten Berührungstasten (212) ausgebildet ist.

12. Tragbares Endgerät nach einem der vorangehenden Ansprüche, **dadurch gekennzeichnet, dass** erste und zweite Vorsprünge (112, 114) und/oder die zweiten Teile (212, 214) durchgehend ausgebildet sind.

13. Tragbares Endgerät nach einem der vorangehenden Ansprüche, **dadurch gekennzeichnet, dass** die ersten Berührungstasten (110) durch das Schiebegehäuse (200) geöffnet und geschlossen werden, die zweiten Berührungstasten (210) die ersten Berührungstasten (110) überdecken, wenn sich das Schiebegehäuse in einer geschlossenen Position in Bezug auf das Hauptgehäuse (100) befindet, und die ersten Berührungstasten (110) an die zweiten Berührungstasten (210) angrenzend angeordnet sind, wenn das Schiebegehäuse in eine offene Position von dem Hauptgehäuse weg bewegt ist.

14. Tragbares Endgerät nach einem der vorangehenden Ansprüche, **dadurch gekennzeichnet, dass** die ersten Berührungstasten (110) und/oder die zweiten Berührungstasten (210) integral mit den ersten und den zweiten Vorsprüngen bzw. den zweiten Teilen (112, 114 sowie 212, 214) ausgebildet sind.

15. Tragbares Endgerät nach einem der vorangehenden Ansprüche, **dadurch gekennzeichnet, dass** ein Kameraobjektiv (121) an einer unteren Fläche des Hauptgehäuses (100) zum Aufnehmen von Fotos und Filmen eingebettet ist.

16. Tragbares Endgerät nach Anspruch 15, **dadurch gekennzeichnet, dass** wenigstens eine Beleuchtungseinheit (122) an das Kameraobjektiv (121) angrenzend angeordnet ist.

17. Tragbares Endgerät nach Anspruch 15 oder 16, **dadurch gekennzeichnet, dass** eine Schiebeabdeckung (120) so eingerichtet ist, dass sie das Kameraobjektiv (121) und wenigstens einer Beleuchtungseinheit (122) schützt, wenn sich diese nicht in Gebrauch befinden.

## Revendications

1. Terminal portable comprenant :
- un boîtier principal (100),
- un boîtier formant couvercle (200), qui est ouvert et fermé par rapport au boîtier principal (100), et
- une pluralité de premières touches tactiles (« Touch Keys ») (110) alignées sur la surface supérieure (100a) du boîtier principal (100) afin de permettre à un utilisateur de saisir des données dans le terminal portable grâce à une action par toucher, **caractérisé par**
- des premières protubérances (112, 114) destinées à diviser les régions tactiles des premières touches tactiles (110).

2. Terminal portable selon la revendication 1, **caractérisé en ce que** ledit boîtier formant couvercle (200) est un boîtier coulissant.

3. Terminal portable selon la revendication 1 ou 2, **caractérisé en ce que** les premières protubérances (112) divisent horizontalement la zone tactile.

4. Terminal portable selon l'une des revendications précédentes, **caractérisé par** des secondes protubérances (114) qui divisent verticalement la zone tactile.

5. Terminal portable selon la revendication 1 ou 2, **caractérisé en ce que** les protubérances (112, 114) mettent la zone tactile sous la forme d'un cercle.

6. Terminal portable selon la revendication 1 ou 2, **caractérisé en ce que** les protubérances (112, 114) mettent la zone tactile sous la forme d'un symbole.

7. Terminal portable selon l'une des revendications précédentes, **caractérisé en ce qu'**une pluralité de secondes touches tactiles (« Touch Keys ») (210) sont ménagées sur la surface supérieure (200a) du boîtier coulissant (200) afin de permettre à un utilisateur de saisir des données en effleurant les secondes touches tactiles (210).

8. Terminal portable selon la revendication 7, **caractérisé en ce que** les zones tactiles des secondes touches tactiles (210) sont divisées par des seconds éléments (212, 214).

9. Terminal portable selon la revendication 7 ou 8, **caractérisé en ce que** les seconds éléments (212, 214) sont des protubérances dépassant de la surface supérieure (200a) du boîtier coulissant (200).

10. Terminal portable selon l'une des revendications précédentes, **caractérisé en ce que** les premières et secondes protubérances et/ou les seconds éléments (112, 114 ; 212, 214) dépassent verticalement des surfaces supérieures (100a, 200a) du boîtier principal (100) ou du boîtier formant couvercle (200), respectivement.

11. Terminal portable selon l'une des revendications précédentes, **caractérisé en ce qu'**une section de protubérances (216) est formée en une seule pièce avec les secondes touches tactiles (210) afin d'ouvrir et de fermer par coulissement le boîtier coulissant (200).

12. Terminal portable selon l'une des revendications précédentes, **caractérisé en ce que** les premières et secondes protubérances (112, 114) et/ou les seconds éléments (212, 214) sont formés de manière continue.

13. Terminal portable selon l'une des revendications précédentes, **caractérisé en ce que** les premières touches tactiles (110) sont ouvertes et fermées par le boîtier coulissant (200), les secondes touches tactiles (210) chevauchent les premières couches tactiles (110) lorsque le boîtier coulissant est placé en position fermée par rapport au boîtier principal (100), et les premières touches tactiles (110) sont adjacentes aux secondes touches tactiles (210) lorsque le boîtier coulissant est déplacé en position ouverte à distance du boîtier principal.

14. Terminal portable selon l'une des revendications précédentes, **caractérisé en ce que** les premières touches tactiles (110) et/ou les secondes touches tactiles (210) sont formées de manière intégrée avec les premières et secondes protubérances et avec les seconds éléments (112, 114 ; 212, 214), respectivement.

15. Terminal portable selon l'une des revendications précédentes, **caractérisé en ce qu'**un objectif (121) d'appareil de prise de vues est intégré sur la surface inférieure du boîtier principal (100) afin de prendre des photographies et des films.

16. Terminal portable selon la revendication 15, **caractérisé en ce qu'**au moins une unité d'éclairement (122) est placé de manière adjacente à l'objectif (121) de l'appareil de prise de vues.

17. Terminal portable selon la revendication 15 ou 16, **caractérisé en ce qu'**un couvercle coulissant (120) est disposé dans le but de protéger l'objectif (121) de l'appareil de prise de vues ainsi qu'au moins l'unité d'éclairement (122) lorsqu'ils ne sont pas utilisés.
